# EUROPÄISCHE PATENTSCHRIFT

(11) **EP 0 903 397 B1**
(45) Veröffentlichungstag und Bekanntmachung des Hinweises auf die Patenterteilung: **12.03.2003**
(21) Anmeldenummer: 98114784.6
(22) Anmeldetag: 06.08.1998
(51) Int. Cl.: C10M 107/34, B29C 33/62, C10N 40/36

(54) **Verwendung von Polyether-Ethoxylaten als Gleit- und Trennmittel für Gummiformkörper**
Use of releasing and lubricating agent based on ethoxylated polyethers for rubber mouldings.
Utilisation d'un agent de démoulage et lubrification à base de polyéthers ethoxylés pour caoutchouc

(30) Priorität: 19.08.1997 DE 19735995
(43) Veröffentlichungstag der Anmeldung: 24.03.1999
(73) Patentinhaber: Goldschmidt AG, 45127 Essen (DE)
(72) Erfinder:

(56) Entgegenhaltungen:
- US-A- 4 265 774
- DATABASE WPI Section Ch, Week 9217 Derwent Publications Ltd., London, GB; Class A25, AN 92-139091 XP002087422 & JP 04 084690 A (SAKAMOTO YAKUHIN KO) , 17. März 1992
- DATABASE WPI Section Ch, Week 8916 Derwent Publications Ltd., London, GB; Class A95, AN 89-119555 XP002087423 & JP 01 066295 A (DAIICHI KOGYO SEIYAKU CO LTD), 13. März 1989
- DATABASE WPI Section Ch, Week 8240 Derwent Publications Ltd., London, GB; Class A97, AN 82-84901E XP002087424 & JP 57 140632 A (DAIICHI KOGYO SEIYAKU CO LTD), 31. August 1982
- DATABASE WPI Section Ch, Week 8721 Derwent Publications Ltd., London, GB; Class A18, AN 87-147210 XP002087425 & JP 62 085003 A (NIPPON MED SUPPLY KK) , 18. April 1987
- DATABASE WPI Section Ch, Week 8337 Derwent Publications Ltd., London, GB; Class A12, AN 83-761860 XP002087427 & JP 58 132090 A (DAIICHI KOGYO SEIYAKU CO LTD), 6. August 1983

## Beschreibung

Die Erfindung betrifft die Verwendung von Polyethern gemäß Anspruch 1 als Gleit- und Trennmittel für Gummiformkörper.

Bei der Herstellung von Gummiformkörpern benötigt man Trennmittel, um die geformten Gummiwaren aus den Formen entnehmen zu können und ein Ankleben der Formkörper an den Formwänden zu vermeiden. Häufig wird an ein derartiges Trennmittel aber auch die Forderung gestellt, daß es die Reibung des Gummiformkörpers an der Wand eines formgebenden Elements verringern soll.

Besonders schwierige Gleit- und Trennprobleme treten bei der Herstellung von sogenannten Krümmerschläuchen, wie sie beispielsweise im Automobilbau und bei Wasch- und Reinigungsmaschinen benötigt werden, auf. Hierbei wird ein vulkanisierbarer Rohling auf einen mitunter sehr kompliziert geformten Dorn aufgezogen. Nach der Vulkanisation muß der heiße Gummiformkörper von dem Dorn abgezogen werden, wozu erheblicher Kraftaufwand notwendig ist. Die benötigte Kraft wird einerseits durch die Formgebung des Dorns und andererseits durch die Haftung des Formkörpers auf dem Dorn bestimmt.

Zur Vermeidung der Haftung und Verbesserung der Gleitfähigkeit hat man derartige zu vulkanisierende Rohlinge, die auf einen gekrümmten Dorn gezogen werden sollen, mit Dispersionen von Silikonölen, Glycerin und Wachsen behandelt. Hierdurch wird zwar die Haftung und Reibung vermindert, jedoch geschieht dies nicht in einem technisch befriedigenden Ausmaß.

Ein Trenn- und Gleitmittel wird z.B. in der europäischen Patentanmeldung EP-A-0 738 775 beschrieben, wo Polyester aus einem Polyethylenglykol oder einem Gemisch von Polyethylenglykolen und einer linearen Dicarbonsäure oder einem Gemisch linearer Dicarbonsäuren eingesetzt werden. Diese flüssigen Verbindungen mit einem relativ niedrigen Molekulargewicht sind niedrigviskos und haben nur ein geringes Druckbelastungsvermögen. Bei diesen Verbindungen ist eine für die Praxis befriedigende Gleitwirkung für die Kautschukrohlinge, insbesondere Rohlinge aus polaren Kautschuktypen nicht gegeben.

Der EP-A-0 537 891 können Trennmittel für die Herstellung von Krümmerschläuchen entnommen werden, die aus Copolymerisaten von Polyethylenoxid und Polypropylenoxid bestehen. Diese Trennmittel zeigen ihre guten Eigenschaften bei ihrer Anwendung bei unpolaren Kautschuktypen, wie z.B. EPDM und dienischem Kautschuk. Sie zeigen aber bei der Verarbeitung von polaren Kautschuktypen, wie z.B. Epichlorhydrinkautschuk und Copolymerisaten, die aus Acrylaten und Äthylen bestehen, nur wenig ausreichende Wirkung. Diese polaren Kautschuktypen sind extrem klebrig und lassen sich deshalb mit diesen Mitteln des Standes der Technik nur schwer entformen.

US-A-4 265 774, JP-A-04 084 690, JP-A-1 066 295 und JP-A-57 140 632 offenbaren Polyether, die erfindungsgemäß verwendet werden. Sie beziehen sich nicht auf Gleit- und Trennmittel für Gummiformkörper.

JP-A-62 085 003 und JP-A-58 132 090 offenbaren Glycerin- und Aminethoxylate als Gleit- und Trennmittel für Erzeugnisse aus Kunststoff oder Gummi.

Der vorliegenden Erfindung liegt die Aufgabe zugrunde, ein Trennmittel insbesondere für die Verarbeitung von polaren Kautschuktypen zur Verfügung zu stellen, welches die o. g. Nachteile vermeidet.

Überraschenderweise wurde ein Trenn- und Gleitmittel gefunden, das einen bei Raumtemperatur flüssigen und eine Viskosität von 400 bis 2000 mPas aufweisenden Polyether umfaßt, der durch Anlagerung von Ethylenoxid an Oligo- und Polyglycerine einzeln oder im Gemisch als Startalkohole erhalten wird, wobei pro Hydroxylgruppe 3 bis 15 Mole Ethylenoxid angelagert werden.

Diese Startalkohole sind deshalb besonders geeignet, da sie bei Raumtemperatur flüssig vorliegen. Als Polyglycerine werden dabei Di-, Tri-, Tetra-, Penta-, Hexa- und Heptaglycerine und Gemische dieser Verbindungen eingesetzt. Polyglycerine dieser Art werden z. B. in den DE-A-34 10 520 und DE-A-36 00 388 beschrieben.

An diese genannten Startalkohole werden 3 bis 15 Ethylenoxideinheiten pro Hydroxylgruppe angelagert, vorzugsweise 5 bis 8. Dabei werden flüssige Produkte erhalten, die eine Viskosität von 400 bis 2000 mPas aufweisen und wasserlöslich sind. Dies ist eine notwendige Maßgabe, damit diese Trennmittel nach ihrem Einsatz aus den vulkanisierten Schläuchen ausgewaschen werden können.

Zur Optimierung der anwendungstechnischen Eigenschaften können noch bis zu 10 % herkömmliche Additive (z.B. Korrosionsschutzmittel, Stabilisatoren, Antioxydantien und Netzmittel) beigemischt werden.

Als Netzmittel zur Verbesserung der Auswaschbarkeit sind die bekannten anionaktiven Tenside verwendbar. Besonders geeignet ist das Natriumlaurylethersulfat. Andere Netzmittel sind zum Beispiel die Dodecylbenzolsulfonate.

Als Korrosionsschutzmittel kann man ebenfalls die aus dem Stand der Technik bekannten Produkte verwenden. Geeignet ist zum Beispiel das Triethanolammoniumsalz einer Alkylarylamidocarbonsäure.

In den folgenden Beispielen wird zunächst die Herstellung der erfindungsgemäßen Gleit- und Trennmittel gezeigt und ihre anwendungstechnischen Eigenschaften näher erläutert.

### Beispiel 1

### Herstellung der erfindungsgemäßen Gleit- und Trennmittel

a) In einen Laborautoklaven mit intensiver Kühlmöglichkeit wurden 362 g Tetraglycerin und 12,92 g 50 %-ige wäßrige KOH vorgelegt. Bei 120 °C wurde das freigesetzte Wasser abdestilliert und anschließend wurden bei 150 °C kontinuierlich 2148 g Ethylenoxid eindosiert. Nach Beendigung der Zugabe ließ man das Reaktionsgemisch bis zur Druckkonstanz weiterreagieren. Anschließend wurde das Produkt mit Phosphorsäure auf eine Säurezahl von 0 bis 1 mg KOH/g eingestellt. Nach Trocknung wurde das ausgefallene Salz abfiltriert.
b) In einen Laborautoklaven mit intensiver Kühlmöglichkeit wurden 313 g Triglycerin und 14,62 g 50 %-ige wäßrige KOH vorgelegt. Bei 120 °C wurde das freigesetzte Wasser abdestilliert und anschließend wurden bei 150 °C kontinuierlich 2180 g Ethylenoxid eindosiert. Nach Beendigung der Zugabe ließ man das Reaktionsgemisch bis zur Druckkonstanz weiterreagieren. Anschließend wurde das Produkt mit Phosphorsäure auf eine Säurezahl von 0 bis 1 mg KOH/g eingestellt. Nach Trocknung wurde das ausgefallene Salz abfiltriert.

### Beispiel 2

### Herstellung einer Zubereitung mit den erfindungsgemäßen Gleitund Trennmittel, deren Anwendung sowie Prüfung der Gleit- und Trenneigenschaften

a) 97 Teile der erfindungsgemäßen Substanz gemäß Beispiel 1 a)
   2 Teile Korrosionsschutzmittel
   1 Teil Antioxidans

   Diese Zubereitung wird durch einfaches scherkraftarmes Mischen in einem Rührwerksbehälter erstellt. Alle Substanzen sind ineinander löslich. Die erstellte Zubereitung weist eine Viskosität von 900 mPas auf. Die vorliegende Zubereitung wird in einer Krümmerschlauchfertigung anwendungstechnisch überprüft. Dazu wird ein nichtvulkanisiertes Schlauchstück aus Acrylatkautschuk von 750 mm Länge und 28 mm Innendurchmesser in eine Trennmittelzubereitung eingetaucht, wobei das Trennmittel in das Innere des Schlauches läuft und dort die Wandung benetzt. Für das Schlauchstück werden 5 g Trennmittel benötigt. Unmittelbar danach wird dieses Schlauchstück auf einen gekrümmten Dorn manuell aufgeschoben. Dabei werden sehr geringe Aufschiebkräfte beobachtet. Daraufhin erfolgt die Vulkanisation mit einem bei 180 °C mit Dampf beheizten Vulkanisationskessel. Die Vulkanisationszeit beträgt 20 Minuten. Danach wird das vulkanisierte Schlauchstück von dem Dorn abgezogen. Der ausvulkanisierte Formkörper läßt sich ohne größere Kraftanstrengung von dem Dorn entfernen. Dieser Zyklus wurde parallel auf 20 bis 30 Dornen ca. 60 mal durchgeführt. Die Dorne zeigten danach noch ein einwandfreies Aussehen.
b) 70 Teile der erfindungsgemäßen Substanz gemäß Beispiel 1 a)
   27 Teile eines Polyesters basierend auf Polyethylenglykol und Adipinsäure
   2 Teile Korrosionsschutzmittel
   1 Teil Antioxidans

   Diese Zubereitung wird ebenfalls durch scherkraftarmes Mischen in einem Rührwerksbehälter erstellt. Die erzielte Viskosität beträgt ca. 1 800 mPas. Die Zubereitung wird in einer Krümmerschlauchfertigung in analoger Weise gemäß Beispiel 2 a) anwendungstechnisch überprüft. Auch in diesem Falle wurden sehr geringe Aufschiebkräfte und Abziehkräfte beobachtet.
c)97 Teile der erfindungsgemäßen Substanz gemäß Beispiel 1 b)
   2 Teile Korrosionsschutzmittel
   1 Teil Antioxidans

   Diese Substanzen sind ineinander löslich und können durch scherkraftarmes Mischen in einem Rührwerksbehälter vermischt werden. Das dabei entstehende Gemisch hat eine Viskosität von 700 mPas. Diese Zubereitung wird in analoger Weise gemäß Beispiel 2 a) angewendet. Auch in diesem Falle werden sehr geringe Aufschiebkräfte und jeweils nach der Vulkanisation ein einwandfreies Abtrennen des Formkörpers vom Dorn festgestellt.
d)Es wird eine Zubereitung gemäß Beispiel 2 b) verwendet. Diese wird in analoger Weise gemäß Beispiel 2 a) in einer Krümmerschlauchfertigung überprüft. In diesem Falle wird jedoch ein Schlauchstück aus EPDM-Kautschuk mit vergleichbaren Abmessungen vulkanisiert. Auch hier zeigten sich sehr geringe Aufschiebkräfte. Nach der Vulkanisation ist ein einwandfreies Abtrennen des Formkörpers vom Dorn festgestellt worden.
e)nicht erfindungsgemäß
   Es wird ein Trennmittel des Standes der Technik überprüft. Es handelt sich um ein Copolymerisat aus Ethylenoxid und Propylenoxid mit einem mittleren Molekulargewicht von 2 800. Das Verhältnis von Ethylenoxid zu Propylenoxid beträgt 30 : 70. Dieses Produkt wurde in analoger Weise gemäß Beispiel 2 a) in einer Krümmerschlauchfertigung überprüft. Es zeigt sich, daß das Aufschieben der Rohlinge und das Abziehen der ausvulkanisierten Schläuche bei sonst analoger Verarbeitungsweise und Werkzeugen gleicher Geometrie mit einer größeren Kraftanstrengung verbunden ist.
f)nicht erfindungsgemäß
   Hier wird ebenfalls ein Mittel des Standes der Technik verwendet. Es handelt sich dabei um ein Polyethylenglykol mit einem Molekulargewicht von 600. Bei der Überprüfung in einer Schlauchfertigung gemäß Beispiel 2 a) wurde ebenfalls ein schweres Aufschieben der Rohlinge festgestellt. Ein Abziehen der ausvulkanisierten Schläuche war praktisch nicht mehr möglich.

### Beispiel 3

### Auswaschen der Trenn- und Gleitmittel aus den vulkanisierten Schläuchen

Die gemäß Beispiel 2 a) bis f) entformten Schlauchstücke werden zur Entfernung der Trennmittelrückstände in einer Industriewaschmaschine ca. 15 Minuten lang bei 40 °C behandelt. Die Trennmittelrückstände nach Beispiel 2 e) waren deutlich schlechter abwaschbar. Der Schlauch war nach der Behandlung noch schmierig. In den übrigen Fällen zeigte sich eine gute Löslichkeit und somit ein gutes Auswaschverhalten der verwendeten Trennmittel.

Die Auswertung der hier beschriebenen Versuche zeigt, daß mit den erfindungsgemäßen Trenn- und Gleitmitteln ein reibungsloser Fertigungsablauf garantiert wird und daß dadurch die Herstellung temperaturbeständiger, hochwertiger Formkörper aus polaren Kautschuktypen erst möglich gemacht wird.

## Patentansprüche

1. Verwendung eines bei Raumtemperatur flüssigen und eine Viskosität von 400 bis 2000 mPas aufweisenden Polyethers, der durch Anlagerung von Ethylenoxid an einen mehr als drei Hydroxylgruppen aufweisenden Startalkohol erhalten wird, wobei pro Hydroxylgruppe 3 bis 15 Mole Ethylenoxid angelagert werden, als Trenn- und Gleitmittel für Gummiformkörper, insbesondere Krümmerschläuche.

2. Verwendung nach Anspruch 1, **dadurch gekennzeichnet, daß** pro Hydroxylgruppe 5 bis 8 Mole Ethylenoxid angelagert werden.

## Claims

1. Use of a polyether which is liquid at room temperature, has a viscosity of from 400 to 2000 mPas and is obtained by addition reaction of ethylene oxide with an initial alcohol having more than three hydroxyl groups, in which reaction from 3 to 15 mol of ethylene oxide are added on per hydroxyl group, as a release agent and lubricant for rubber mouldings, especially elbow hoses.

2. Use according to Claim 1, **characterized in that** from 5 to 8 mol of ethylene oxide are added on per hydroxyl group.

## Revendications

1. Utilisation d'un polyéther liquide et ayant une viscosité de 400 à 2 000 mPa.s à la température ambiante, qui est obtenu par fixation par addition d'oxyde d'éthylène sur un alcool de départ comportant plus de trois groupes hydroxy, de 3 à 15 moles d'oxyde d'éthylène par groupe hydroxy étant fixées par addition, en tant qu'agent de démoulage et lubrifiant pour corps moulés en caoutchouc, en particulier pour tuyaux souples coudés.

2. Utilisation selon la revendication 1, **caractérisée en ce que** de 5 à 8 moles d'oxyde d'éthylène par groupe hydroxy sont fixées par addition.
